# EUROPEAN PATENT SPECIFICATION

(11) **EP 2 695 332 B1**
(45) Date of publication and mention of the grant of the patent: **12.12.2018**
(21) Application number: 12720305.7
(22) Date of filing: 05.04.2012
(51) Int. Cl.: H04L 12/28, G06F 3/048

(54) **METHOD AND APPARATUS FOR CREATING AND MODIFYING GRAPHICAL SCHEDULES**
VERFAHREN UND VORRICHTUNG ZUR ERZEUGUNG UND MODIFIZIERUNG VON GRAPHISCHEN PLÄNEN
PROCÉDÉ ET APPAREIL POUR CRÉER ET MODIFIER DES PROGRAMMES GRAPHIQUES

(30) Priority: 06.04.2011 US 201113081183; 29.04.2011 US 201113097189
(43) Date of publication of application: 12.02.2014
(73) Proprietor: Savant Systems LLC, Hyannis, MA 02601 (US)
(72) Inventor: CIPOLLO, Nicholas, J., Boston, MA 02114 (US); SILVA, Michael, C., East Sandwich, MA 02537 (US); LOCASCIO, Timothy, R., Osterville, MA 02655 (US); MADONNA, Robert, P., Osterville, MA 02655 (US)
(74) Representative: Rupprecht, Kay
(86) International application number: PCT/US2012/000191
(87) International publication number: WO 2012/138401

(56) References cited:
- JP-A- 2009 275 928
- US-A9- 2007 198 099
- MELIONES A ET AL: "A Context Aware Connected Home Platform for Pervasive Applications", SELF-ADAPTIVE AND SELF-ORGANIZING SYSTEMS WORKSHOPS, 2008. SASOW 2008. SECOND IEEE INTERNATIONAL CONFERENCE ON, IEEE, PISCATAWAY, NJ, USA, 20 October 2008 (2008-10-20), pages 120-125, XP031436774, ISBN: 978-0-7695-3553-1

## Description

### BACKGROUND OF THE INVENTION

### Field of the Invention

The present invention relates generally to schedulers and, more specifically, to creating and modifying graphical schedules which are associated with devices that are controlled by a programmable multimedia controller.

### Background Information

In recent years, both commercial and home automation solutions have advanced rapidly in terms of features and capabilities while falling in price. Prior solutions that required extensive custom programming and expensive, proprietary touchpanels for user input devices have been challenged and displaced by new solutions with open application programming interfaces and inexpensive user input devices such as multi-touch smart-phones and tablets.

As automation solutions have advanced and evolved, so too have the number and variety of devices that users may own and wish to integrate into an automation solution. As more devices having increasingly diverse features and functionalities become available, a problem has arisen: how to reliably instruct an automation system to perform desired functions or take certain actions at desired times. Stated another way, in the area of automation solutions, there exists a need for a simple, intuitive, easily installed and inexpensive way to create and maintain schedules for the performance of desired functions and actions by a wide variety of devices and equipment.

Document US 2007/198099 A9 discloses a graphical user interface system for a thermal comfort controller.

### SUMMARY OF THE INVENTION

In brief summary, the present invention provides a graphical user interface which enables a user to create graphical schedules, as well as modify existing graphical schedules, for a wide variety of devices controlled by a programmable multimedia controller. When displayed to the user, a graphical schedule graphically depicts a relationship between time and at least one user-selected condition to be satisfied (*e.g.,* a minimum temperature to be maintained in a home during evening hours) or at least one user-selected action to be taken (*e.g.,* turning on a sprinkler system at noon). Depending upon the user's data input device, the user may easily create or modify a graphical schedule by graphically manipulating the time-based relationship using techniques such as taps and swipes, drag and drop, point and click, or other techniques.

In addition, a user may create and modify presets which are associated with a graphical schedule. One type of preset represents a user-selected environmental state for a predetermined physical space. For example, a user may create a preset for a family room in a home in which, at a predetermined time, certain light fixtures are turned on, a television is turned on and tuned to a particular channel, and the motorized shades are closed. Presets may be created for single rooms or multi-room zones within a structure, or for the structure as a whole, and may address one or multiple devices controlled by a programmable multimedia controller.

In another aspect of the invention, a graphical schedule is simultaneously displayed to a user along with pertinent historical information. Historical information may include information regarding actual past performance of a particular device or group of devices, *e.g.,* historical power usage, the prices charged by a local utility, the power generated by a grid tie system or a wide variety of other information. By simultaneously displaying a graphical schedule with such information, a user is able to recognize advantageous relationships and, in turn, create or modify a graphical schedule that leverages such relationships. For example, by simultaneously displaying a graphical schedule for charging an electric vehicle with the prices charged by a power utility which vary by time of day, a user may recognize that the vehicle should be scheduled to be charged in the early morning hours when the prices are lowest. Similarly, by simultaneously displaying the graphical schedule for charging the electric vehicle with the power generated by a user's solar or wind grid tie system, a user may recognize that the vehicle should be scheduled to be charged during peak power generation by the grid tie system.

The graphical user interface may be presented to a user using any of a variety of devices including touch-sensitive devices, an on screen display, or a conventional video display in which user input is made through a keyboard or mouse.

The invention concerns a method as in claim 1 and an apparatus as in claim 11.

### BRIEF DESCRIPTION OF THE DRAWINGS

The invention may be better understood by referring to the following description in conjunction with the accompanying drawings in which like reference numerals indicate identical or functionally similar elements:
Fig. 1 is a block diagram of a system which includes a programmable multimedia controller interconnected with a variety of devices that may be controlled by the controller;
Fig. 2 is a high level block diagram of the hardware architecture of the programmable multimedia controller of Fig. 1;
Fig. 3 is a functional block diagram of certain hardware components and software processes which may be involved in creating or modifying graphical schedules in accordance with a preferred embodiment of the present invention;
Fig. 4 is a main screen of a graphical user interface which enables a user to create and modify graphical schedules which are associated with devices controlled by the programmable multimedia controller of Fig. 1, in accordance with a preferred embodiment of the present invention;
Fig. 5 is a screen of the graphical user interface showing an existing graphical calendar for HVAC that is available for editing;
Fig. 6 is a main screen of a graphical user interface which enables a user to create and modify profiles and presets which are associated with devices controlled by the programmable multimedia controller of Fig. 1, in accordance with a preferred embodiment of the present invention;
Fig. 7 is a screen of the graphical user interface showing existing presets for lighting control that are available for editing;
Fig. 8 is a screen of the graphical user interface showing an existing graphical schedule that is available for editing and which includes several presets;
Fig. 9 is a screen of the graphical user interface showing power demand experienced by a power utility by time of day;
Fig. 10 is a screen of the graphical user interface showing a graphical calendar for HVAC displayed simultaneously with the utility power demand historical data of Fig. 9; and
Fig. 11 is a screen of the graphical user interface showing a graphical calendar for charging an electric vehicle displayed simultaneously with power generated by a solar grid tie system and the utility power demand historical data of Fig. 9.

### DETAILED DESCRIPTION OF AN ILLUSTRATIVE EMBODIMENT

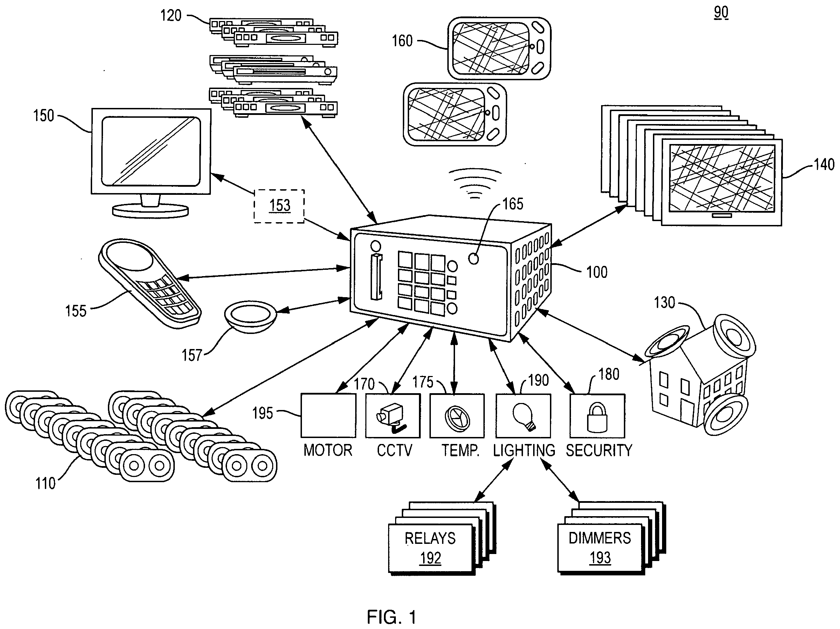

Fig. 1 is a block diagram of a system 90 which includes a programmable multimedia controller 100 interconnected to a number of devices. The term "programmable multimedia controller" should be interpreted broadly as a device which includes a general purpose computer and is capable of controlling, switching data among, and/or otherwise interoperating with a variety of electrical and electronic devices, such as audio, video, telephony, data, security, motor-operated, relay-operated, heating, ventilation, and air conditioning (HVAC), energy management, electrical panels and circuits, grid tie systems, appliances and/or other types of systems, equipment and devices. A line of programmable multimedia controllers are available from Savant Systems, LLC of Osterville, Massachusetts.

Programmable multimedia controller 100 may be coupled to or interfaced with a variety of A/V devices, including audio source devices 110, such as compact disk (CD) players, digital video disc (DVD) players, microphones, digital video recorders (DVRs), cable boxes, audio/video receivers, personal media players, and other devices that source audio signals. Programmable multimedia controller 100 may also be coupled to or interfaced with a variety of video source devices 120, such as DVD players, DVRs, personal media players and other devices that source video signals. Programmable multimedia controller 100 may be coupled to or interfaced with a variety of audio output devices 130, such as speakers, devices that incorporate speakers, and other devices that output audio, as well as a variety of video output devices 140, such as televisions, monitors, and other devices that output video.

Further, programmable multimedia controller 100 may be coupled to or interface with, control, and otherwise interoperate with a variety of other types of devices, either directly, or through one or more intermediate controllers. For example, programmable multimedia controller 100 may be coupled to a closed-circuit television (CCTV) control system 170 that manages a system of cameras positioned about a home or other structure, HVAC control and/or energy management system 175 that manages HVAC devices to regulate environmental functions and/or energy management devices in the home or other structure, and/or a security system 180 that manages a plurality of individual security sensors in the home or other structure. In response to control commands received from programmable multimedia controller 100, CCTV control system 170, HVAC control system and/or energy management system 175, and security system 180 may manage the devices under their respective immediate control.

Further, programmable multimedia controller 100 may be coupled to or interface with, control, and otherwise interoperate with, one or more electronic lighting controllers 190. Electronic lighting controllers 190 may be coupled to, for example, via wired or wireless links, a plurality of relays 192 and/or dimmer units 193 distributed throughout the home or other structure, and wired inline with the electrical feed to individual light fixtures located therein. In response to control commands received from programmable multimedia controller 100, electronic lighting controllers 190 may selectively trigger relays 192 and/or adjust dimmer units 193 wired inline to particular light fixtures (not shown), to create a desired level of illumination or darkness in different rooms of the home or other structure.

Similarly, programmable multimedia controller 100 may be coupled to or interfaced with, control, and otherwise interoperate with, one or more motor operated device controllers 195, for example, one or more automatic window shade controllers, or other types of controllers. As with lighting control, in response to control commands received from programmable multimedia controller 100, motor-operated device controllers 195 may selectively trigger motor-operated devices (not shown) in various rooms of the home or other structure, to achieve desired effects.

Programmable multimedia controller 100 may receive user-input via one or more control units 150, for example, wall-mounted control units, table-top control units, handheld portable control units, and the like, that include a display screen. Control units 150 may include a touch screen interface, a mouse and pointer interface, or other type of interface. Control units 150 may be special-purpose units, dedicated to operating with programmable multimedia controller 100, or general-purpose devices, for example, laptop computers, desktop computers, and the like, configured with software to implement a user interface. In some cases, control units 150 may be coupled to programmable multimedia controller 100 via an intermediate device 153, such a computer, via a wired or wireless connections or networks. In other cases, control units 150 may communicate directly to programmable multimedia controller 100.

Programmable multimedia controller 100 may also receive user-input via one or more handheld button-centric remote control units and/or wall mounted button-centric control units 155, or from one or more handheld remote control units including an annular touch sensor 157. Remote control units including annular touch sensor 157 may be adapted to manipulate, and make control selections using, an on-screen display (OSD) system. Further details regarding remote control units, including an annular touch sensor, and an OSD may be found in copending applications by Madonna et al., U.S. Patent Application Serial No. 11/520,328, filed Sept. 13, 2006 and titled "Remote Control Unit for a Programmable Multimedia Controller," U.S. Patent Application Serial No. 11/687,511, filed March 16, 2007 and titled "System and Method for Mixing Graphics with Video Images or Other Content," and U.S. Patent Application Serial No. 11/687,458, filed March 16, 2007 and titled "Programmable On Screen Display and Remote Control" all of which are incorporated by reference herein in their entireties.

Programmable multimedia controller 100 may also receive user-input via one or more mobile devices 160. As used herein, the term "mobile device" refers to electronic devices that are adapted to be transported on one's person, including multimedia smart-phones, such as the iPhone® multimedia phone available from Apple Inc. and the Blackberry® device available from Research In Motion Limited, multi-purpose tablet computing devices, such as the iPad® tablet available from Apple Inc., portable media players with enhanced capabilities, such as the iPod® touch available from Apple Inc., personal digital assistants (PDAs), electronic book readers, and the like. Such mobile devices may communicate directly with programmable multimedia controller 100, or indirectly through various wireless, cellular, and/or wired networks (not shown).

Further, programmable multimedia controller 100 may receive user-input via a touch screen or other interface integrated into programmable controller multimedia 100 itself, for example, a touch screen or other interface arranged as a front panel 165 of programmable multimedia controller 100. Still further, programmable multimedia controller 100 may receive user-input via a touch screen integrated into a video output device 140, such as a television.

In response to user-input from any of control units 150, button-centric remote control units and/or wall mounted button-centric control units 155, remote control units including annular touch sensor 157, mobile devices 160, front panel 165 and/or video output devices 140, programmable multimedia controller 100 may switch data among, issue control commands to, and/or otherwise interoperate with, audio source devices 110, video source devices 120, audio output devices 130, and/or video output devices 140. Further, in response to the user-input, programmable multimedia controller 100 may issue control commands to, and otherwise interoperate with, CCTV control system 170, HVAC control and/or energy management system 175, security system 180, electronic lighting controllers 190, as well as motor operated device controllers 195.

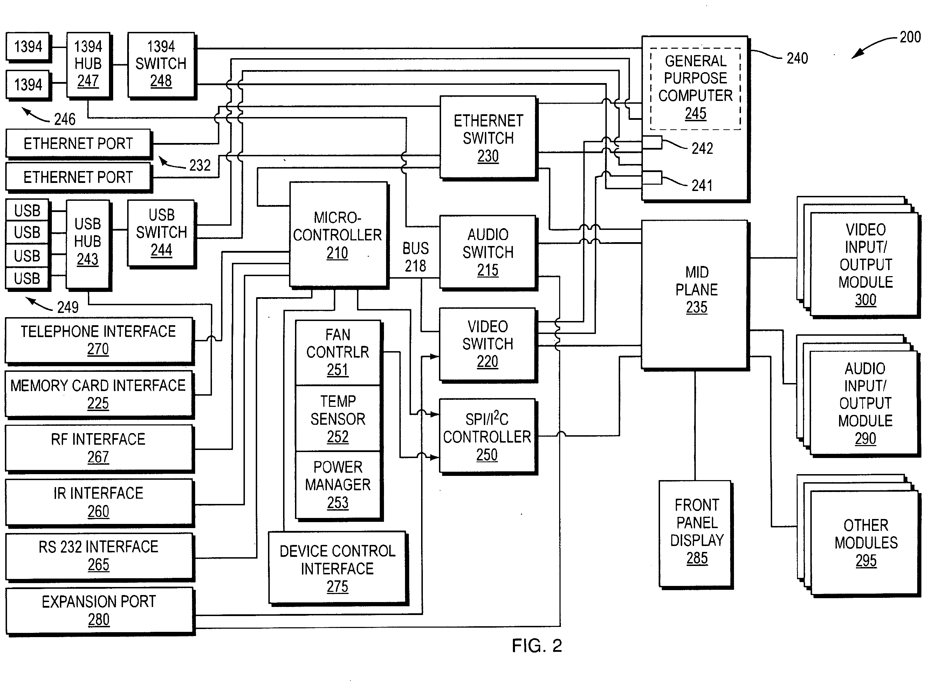

Fig. 2 is a schematic block diagram of a high-level hardware architecture 200 for programmable multimedia controller 100. The various components shown may be arranged on a "motherboard" of programmable multimedia controller 100, or on a plurality of circuit cards interconnected by a backplane (not shown). A microcontroller 210 manages the general operation of programmable multimedia controller 100. Microcontroller 210, in some configurations, is coupled to an audio switch 215 and a video switch 220 via a bus 218. Audio switch 215 and video switch 220 are preferably crosspoint switches capable of switching a number of connections simultaneously. However, many other types of switches capable of switching digital signals may be employed, for example Time Division Multiplexing (TDM) switches or other devices. Further, while two separate switches 215, 220 are shown, audio and video switching may be consolidated into a single switch that supports switching of both types of data, or switches 215, 220 may not be present in some configurations.

A mid plane 235 interconnects audio and video switches 215, 220 to a variety of input and output modules, for example, one or more Video Input/Output Modules 300, one or more Audio Input/Output Modules 290, and/or one or more other modules 295. Mid plane 235 is further coupled to an Ethernet switch 230 that permits switching of 10BaseT, 100BaseT, Gigabyte Ethernet and/or other types of data signals. Ethernet switch 230 interconnects Ethernet ports 232 and a processing subsystem 240 to microcontroller 210.

In one embodiment, processing subsystem 240 includes one or more "general-purpose computers" 245. A general-purpose computer 245, as used herein, refers to a device that is configured to execute a set of instructions, and depending upon the particular instructions executed, may perform a variety of different functions or tasks. Typically, but not always, a general-purpose computer 245 executes a general-purpose operating system, such as the Windows® operating system, available from Microsoft Corporation, the Linux® operating system, available from a variety of vendors, the OSX® operating system, available from Apple Inc., or another operating system. A general-purpose computer 245 may have any of a variety of form factors. For example, a general-purpose computer 245 may be a Central Processing Unit (CPU) card, a Single Board Computer (SBC), a PC/104 processing module, a conventional ATX form factor motherboard and CPU, an "off-the-shelf' small form factor general-purpose personal computer including a case, power supply, and other accessories, an "off-the-shelf' large form factor general-purpose personal computer including a case, power supply, and other accessories, and/or a rack-mount general-purpose personal computer including a case, power supply, and other accessories. General-purpose computer 245 may include a storage device, for example a hard drive, a compact disc read-only memory (CDROM) drive, a Flash memory, or other type of storage device, and/or may be interconnected to a storage device provided elsewhere in the processing subsystem 240.

Processing subsystem 240 preferably has one or more graphics outputs 241, 242 such as analog Video Graphics Array (VGA) connectors, Digital Visual Interface (DVI) connectors, Apple Display Connector (ADC) connectors, or other type of connectors, for supplying graphics. Such graphics outputs 241, 242 may, for example, be supplied directly from the one or more general-purpose computers 245 of the processing subsystem 240. As used herein, the term "graphics" should be interpreted broadly to encompass a wide variety of computer graphics, text, full-motion video, still images, or other types of visual data, represented in any of a variety of different color spaces, for example RGB, YCrCb, and the like, at any of a variety of different color depths, for example 8-bit color, 16-bit color, 24-bit color, 32-bit color, and the like. Graphics from processing subsystem 240 are passed to video switch 220, in some configurations, and then switched to other parts of programmable multimedia controller 100, for example to Video Input/Output Modules 300. Alternately, graphics from processing subsystem 240, in some arrangements, may pass directly to a module, such as Video Input/Output Modules 300.

A number of Universal Serial Bus (USB) ports 249 interconnected to a USB hub 243. A memory card interface 225 is also connected to USB hub 243. The interface may accept one or more well-known memory card formats, for example CompactFlash™ cards, Memory Stick™ cards, Secure Digital™ (SD) cards, or other formats. A USB switch 244 is employed to switch USB links to processing subsystem 240. In a similar manner, a number of IEEE 1394 (FireWire™) ports 246 are interconnected to an IEEE 1394 hub 247 and to an IEEE 1394 switch 248, for switching to the processing subsystem 240.

Microcontroller 210 is further connected to a Serial Peripheral Interface (SPI) and Inter-Integrated Circuit (I²C) distribution circuit 250, which provides a serial communication interface to relatively low data transfer rate devices. SPI/ I²C controller 250 is connected to mid plane 235 and thereby provides control commands from microcontroller 210 to modules 290, 295, 300 and other devices of the programmable multimedia controller 100. Further, connections from the SPI/ I²C controller 250 are provided to devices such as a fan controller 251, a temperature sensor 252, and a power manager circuit 253, which collectively manage the thermal characteristics of programmable multimedia controller 100 and prevent overheating.

Microcontroller 210 is also connected to an Infra-Red (IR) interface 260, an RS232 interface 265, and a RF interface 267, each of which permits further interconnection with external devices. Also, a device control interface 275 is provided to communicate with lighting, home automation, and motor and/or relay operated devices. It is expressly contemplated that various other interfaces, including WI-FI, Bluetooth™, Zig-Bee™ and/or other wired and wireless interfaces, may be employed by programmable multimedia controller 100.

Finally, an expansion port 280 is provided for linking several programmable multimedia controllers 100 together, to form an expanded system, while a front panel display 285, for example a touch screen Liquid Crystal Display (LCD) display, is provided to display status, configuration, and/or other information to a user, as well as to accept user input.

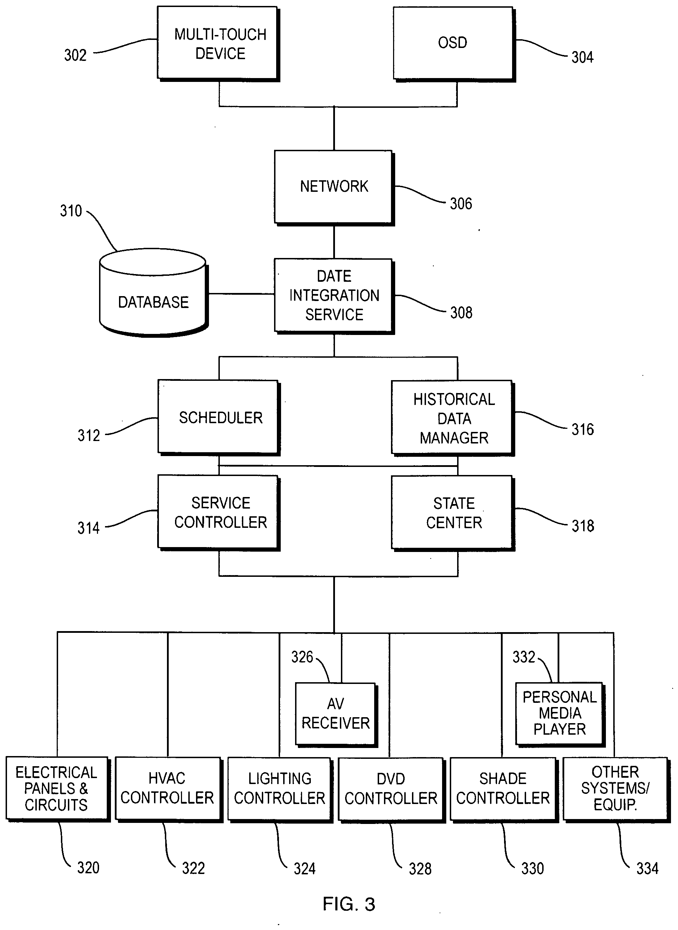

Fig. 3 is a functional block diagram of certain hardware components and software processes which may be involved in creating or modifying graphical schedules as described in detail below. A multi-touch device 302, which represents one type of user interface device that may be used in connection with the present invention, may be implemented with an iPod® Touch, iPhone® and iPad® from Apple Inc. (not shown). An on-screen display (OSD) 304, which represents an alternative type of user interface device that may be used in connection with the present invention, is described in the copending applications incorporated by referenced above. Yet another alternative type of user interface device would be a computer with a video monitor, keyboard and mouse (not shown).

A network process 306 provides the basic functionality to support both wired and wireless network communication with multi-touch device 302 and OSD 304. Information (user input) received from multi-touch device 302 and OSD 304 is passed by network process 306 to a data integration service 308. In general, data integration service 308 interprets commands received from multi-touch device 302 and OSD 304, stores data points and provides appropriate feedback (*e.g.,* changes in screen appearance, sounds, etc.) to multi-touch device 302 and OSD 304. Data integration service 308 provides a generic engine for data manipulation and presentation with user interfaces. Among other functions, data integration service 308 may store data in, as well as retrieve data from, a database 310 or other suitable store. With respect to graphical schedules, data integration service 308 uses database 310 to store schedule points as described below.

A scheduler process 312 communicates with data integration service 308 and is capable of recognizing schedule points previously stored by that service. Once the current day (or date) or time, or both, match a stored schedule point, scheduler process 312 issues appropriate messages or commands to a service controller 314. Depending upon the action(s) to be taken, in accordance with a schedule previously created by a user, service controller 314 issues appropriate messages or commands to electrical panels and circuits 320, HVAC controller 322, lighting controller 324, audio/video (AV) receiver 326, DVD controller 328, shade controller 330, personal media player 332 or other systems/equipment 334 which are controlled by a programmable multimedia controller 100 (Fig. 1).

A historical data manager 316 communicates with data integration service 308 and a state center 318. In general, historical data manager 316 functions to collect information pertaining to the actual performance of the equipment identified by reference numbers 320-334 as well as pertinent information from external sources, *e.g.,* the internet via one of Ethernet ports 232 (Fig. 2), a user data storage device via one of USB ports 247 (Fig. 2) or other external source. For example, historical data manager 316 may use the internet to collect pricing information from a utility company, current weather conditions and forecasts or other pertinent information. In general, information collected by historical data manager 316 is passed to data integration service 316 through which it may be stored in database 310, displayed on multi-touch device 302, OSD 304 or another user input device or otherwise used.

State center 318 communicates with historical data manager 316, as well as equipment 320-334. State center 318 functions to receive state-related information from equipment 320-334, and pass appropriate information to scheduler 312 and historical data manager 316. State center 318 also receives commands or data originating from multi-touch device 302, OSD 304 or other user input devices and issues appropriate commands to equipment 320-334.

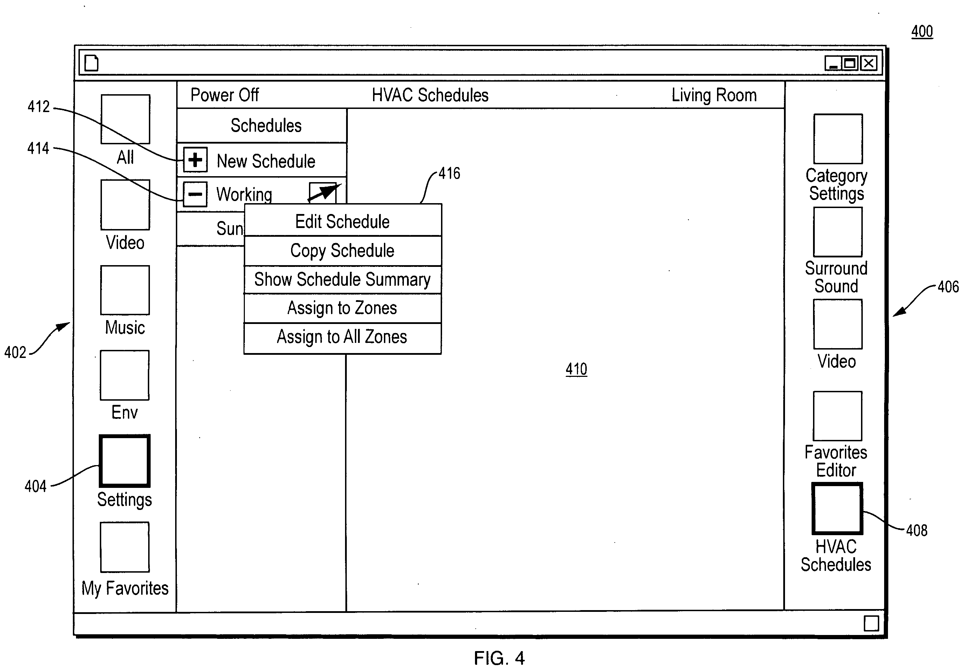

Fig. 4 depicts a main screen 400 of a graphical user interface which enables a user to create and modify graphical schedules for devices controlled by programmable multimedia controller 100 of Fig. 1. User control buttons 402 enable a user to select a major category such as All, Video, Music, Env(ironmental), Settings and My Favorites. As indicated by a boldface border, a user has selected the Settings category by pressing button 404.

Within the Settings category, additional user control buttons 406 appear and these include Category Settings, Surround Sound, Video, Favorites Editor and HVAC Schedules. Again, as indicated by a boldface border, a user has selected HVAC Scheduling by pressing button 408. A workspace 410 is provided in which a graphical schedule may be displayed, as described below. By pressing a control button 412, a user may initiate the creation of a new graphical schedule for HVAC in workspace 410. Alternatively, by pressing a control button 414, a user may recall from persistent data storage (not shown) one or more existing or "working" graphical schedule(s) for HVAC.

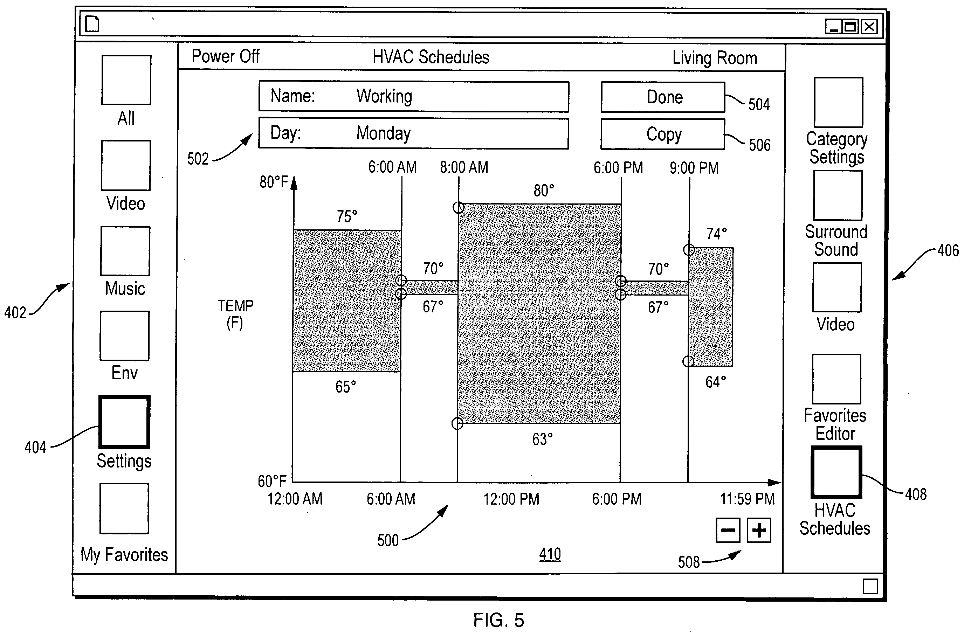

With respect to any working graphical schedule, as shown in a popover menu 416, a user may choose among several possible actions with respect to that schedule. More specifically, popover menu 416 allows a user to edit or copy the working graphical schedule, to display a summary, to assign the working schedule to zones (*e.g.,* particular rooms or portions of a home) or to assign the working schedule to all zones. Assume that a user wishes to edit an HVAC working graphical schedule and presses the Edit Schedule box in popover 416. This action will result in the HVAC working graphical schedule being retrieved from data storage and displayed in workspace 410 as shown in Fig. 5.

In Fig. 5, HVAC working graphical schedule 500 is displayed in workspace 410. At the top of workspace 410, text boxes 502 identify the name (Working) of graphical schedule 500 and the day of week (Monday) to which it applies. When selected by a user, a popover menu (not shown) may appear to enable a user to change the day of week. A control button 504 (Done) may be pressed by a user when editing is complete. A control button 506 (Copy) may be pressed by a user and a popover menu (not shown) of copy options will appear. Copy options may include copying a graphical schedule from the previous day, copy the currently displayed graphical schedule to the next day, or copying the currently displayed graphical schedule to all weekdays, all weekend days or all days.

Graphical schedule 500 shows a 24 hour time of day along a horizontal axis and temperature along a vertical axis. For any given time, there are two temperatures. The higher temperature (*e.g.,* 75° between 12:00 a.m. and 6:00 a.m.) represents a maximum temperature that must be reached before the HVAC system cools the room. The lower temperature represents a minimum temperature (*e.g.,* 65° between 12:00 a.m. and 6:00 a.m.) that must be reached before the HVAC system heats the room. Control buttons 508 (-/+) enable a user to remove or add, respectively, schedule points to graphical schedule 500. When graphical schedule 500 is displayed on a touch-sensitive device, a user may easily and rapidly modify the temperatures or time boundaries with swipes or similar gestures. Alternatively, modifications may also be made through a user's interactions with an on-screen display, a keyboard, mouse or other user input device.

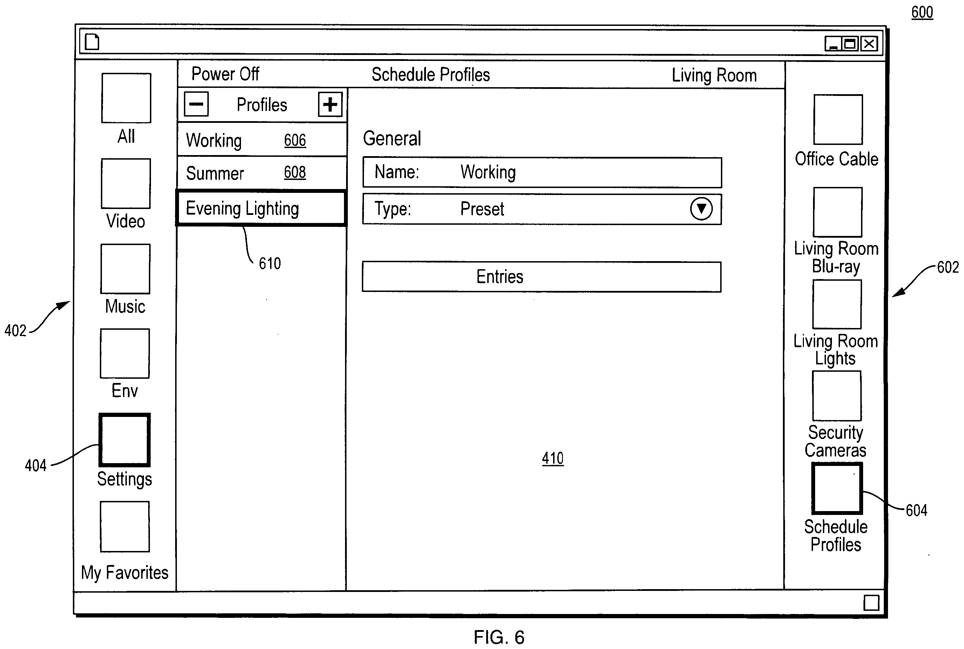

Fig. 6 depicts a main screen 400 of a graphical user interface which enables a user to create and modify presets which are associated with devices controlled by programmable multimedia controller 100 of Fig. 1. User control buttons 402 enable a user to select a major category such as All, Video, Music, Env(ironmental), Settings and My Favorites. As indicated by a boldface border, a user has selected the Settings category by pressing button 404.

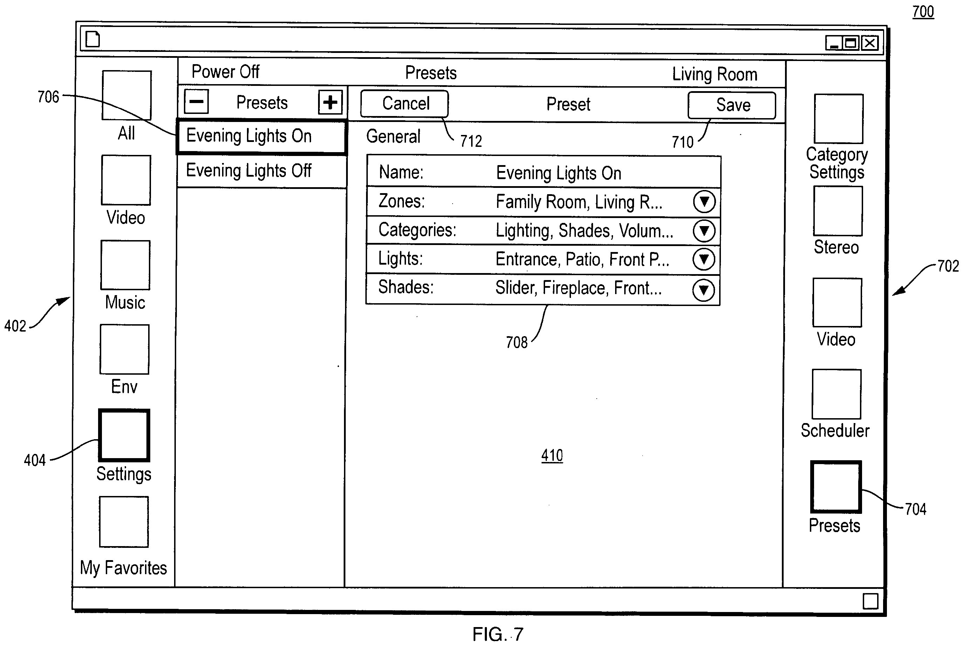

Within the Settings category, additional user control buttons 602 which correspond to various devices controlled by programmable multimedia controller 100. Specifically, control buttons 602 correspond, respectively, to Office Cable, Living Room Blu-ray, Living Room Lights and Security Cameras. As indicated by a boldface border, a user has selected Schedule Profiles by pressing button 604. Of three existing profiles listed as Working 606, Summer 608 and Evening Lighting 610, assume that a user wishes to view and possibly modify presets associated with the last. By selecting Evening Lighting 610, as indicated by the boldface border, this action will result in the presets associated with that profile being displayed as shown in Fig. 7.

In Fig. 7, a different set of control buttons 702 are displayed. As indicated by a boldface border, a user has pressed control button 704 (Presets) in order to view and possibly modify a configuration of an Evening Lights On preset 706. In this example, Evening Lights On preset 706 operates to turn on certain lights, set the position of certain shades, and possibly perform other actions at a predetermined time in the evening. Thus, Evening Lights On preset 706 operates to create a user-selected environmental state for a predetermined physical space.

Shown in Evening Lights On preset configuration 708 are the name of the preset, the zones (*i.e.,* physical space(s)) and service categories which are impacted by the preset's actions, the particular devices (*i.e.,* individual lights and shades) that are impacted by the preset's actions. With the exception of the name of the preset, each other item shown in preset configuration 708 has a popover menu (not shown) which enables a user to modify the configuration. Once any desired modifications are complete, a user may press a Save button 710 in order to save the changes. If a user wished to discard the changes, he or she would press a Cancel button 712.

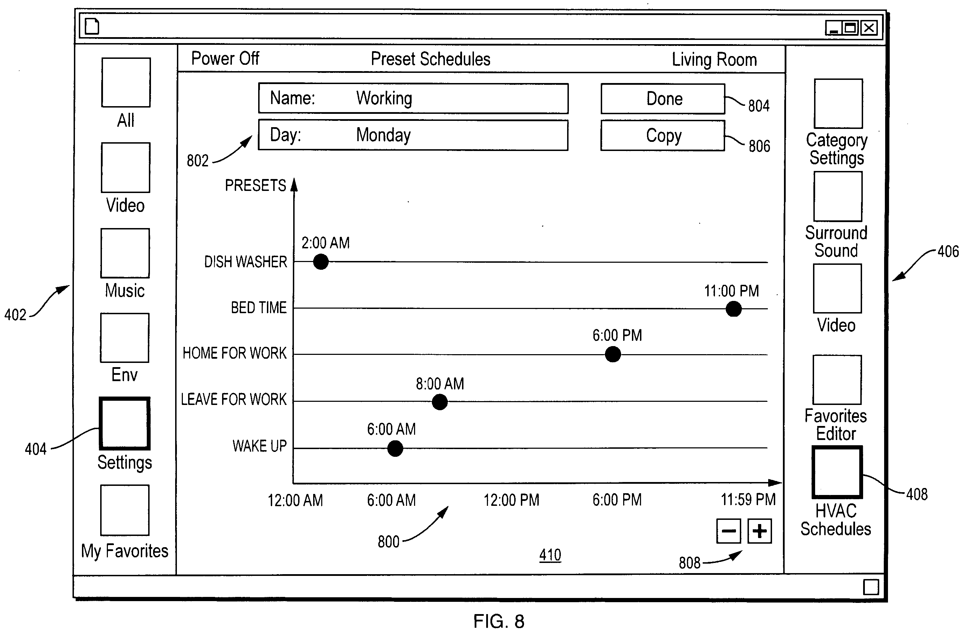

In Fig. 8, a graphical schedule 800 which includes several presets is displayed in workspace 410 and is available for editing. At the top of workspace 410, text boxes 802 identify the name (Working) of graphical schedule 800 and the day of week (Wednesday) to which it applies. When selected by a user, a popover menu (not shown) may appear to enable a user to change the day of week. A control button 804 (Done) may be pressed by a user when editing is complete. A control button 806 (Copy) may be pressed by a user and a popover menu (not shown) of copy options will appear.

Graphical schedule 800 shows a 24 hour time of day along a horizontal axis and a total of five presets along a vertical axis. For example, a first preset named Dish Washer is scheduled to run at 2:00 a.m. A second preset named Bed Time is scheduled to run at 11:00 p.m. Control buttons 808 (-/+) enable a user to remove or add, respectively, presets to graphical schedule 800. When graphical schedule 800 is displayed on a touch-sensitive device, a user may easily and rapidly modify the scheduled times at which presets run with swipes or similar gestures. Alternatively, modifications may also be made through a user's interactions with an on-screen display, a keyboard, mouse or other user input device.

As an alternative, or in addition, to scheduling presets to run using a graphical calendar as described above, a user may assign a preset to a desired button in a user interface. In this fashion, a user may run a desired preset on demand by pressing the assigned button. Details regarding button assignment are provided in U.S. Patent Application Serial No. 11/687,458 incorporated by reference above.

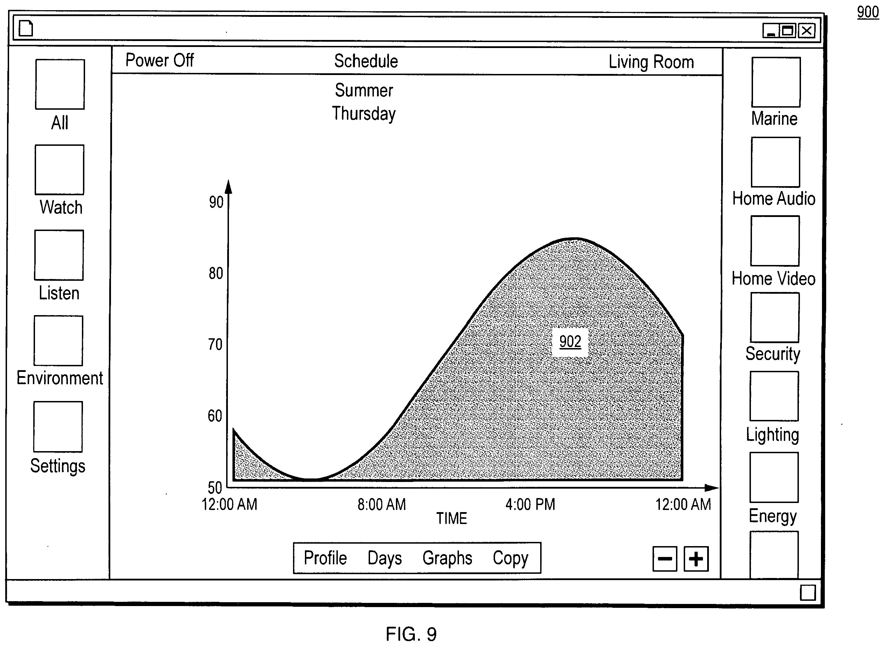

Turning now to Fig. 9, a screen 900 of the graphical user interface shows an example of historical data collected by historical data manager 316 (Fig. 3). Specifically, screen 900 shows power demand historical data 902 experienced by a typical power utility as a function of the time of day during the summer. Peak demand occurs slightly later than 4:00 p.m. and the lowest demand occurs at about 4:00 a.m. Many power utilities use variable pricing for the power they deliver, meaning that the higher the demand at a given time, the higher the price that is charged. Thus, the historical data shown in screen 900 represents both the demand for and price of power and may be advantageously used in conjunction with graphical schedules discussed above.

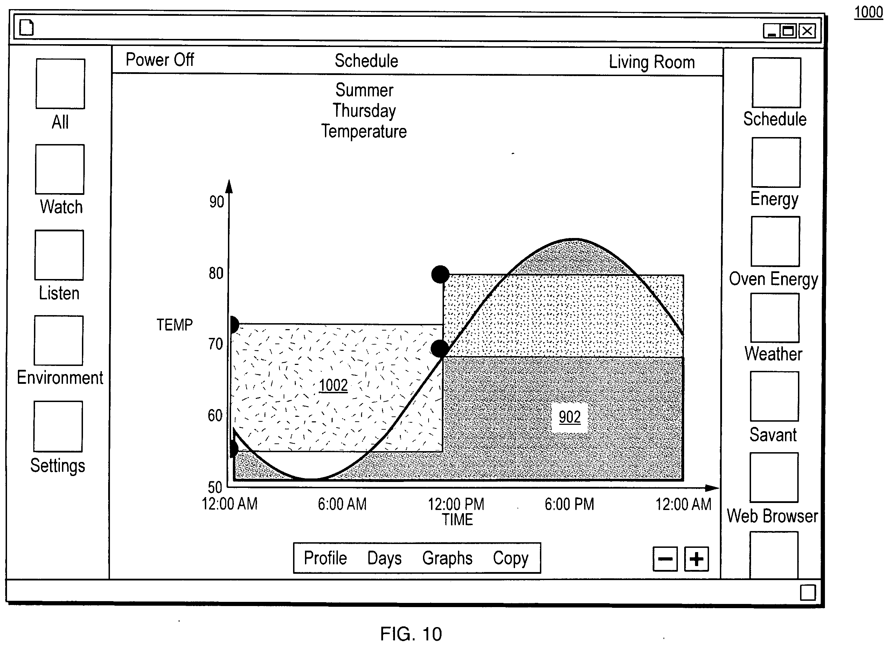

Fig. 10 shows a screen 1000 of the graphical user interface in which a graphical calendar for HVAC 1002 (similar to graphical calendar 500 described above in connection with Fig. 5) is displayed simultaneously with power demand/price historical data 902 of Fig. 9. By simultaneously displaying such information, a user is able to directly see the relationship between the specified heating/cooling performance and the relative cost of obtaining that performance. By graphically manipulating graphical schedule 1002 as described above, a user may easily reduce his or her power utility bill by changing heating/cooling performance during peak demand/cost and otherwise taking advantage of lower demand/cost time periods.

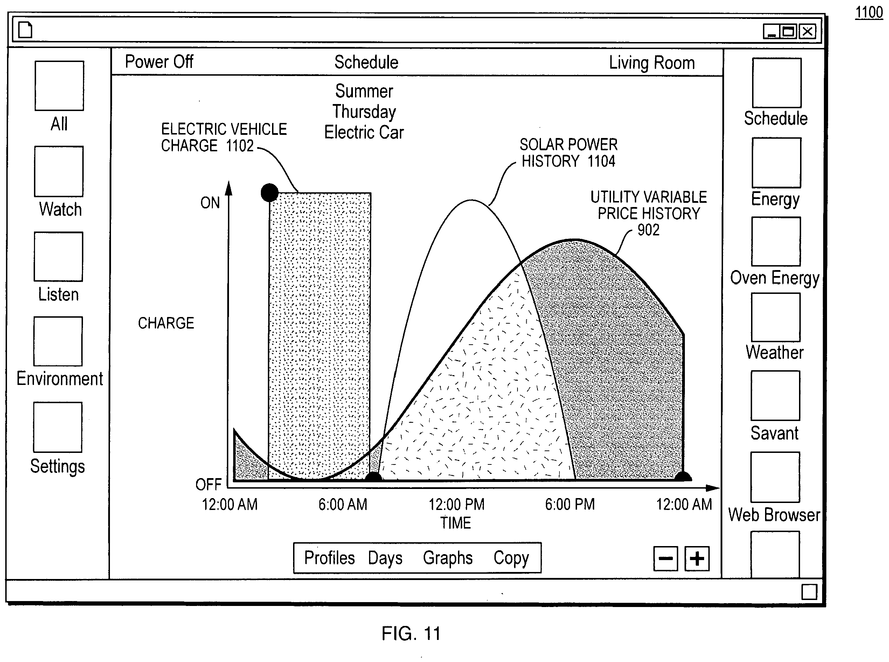

Fig. 11 shows a screen 1100 of the graphical user interface in which a graphical calendar for charging an electric vehicle 1102 is displayed simultaneously with historical data for power generated by a solar grid tie system 1104 as well as power demand/price historical data 902 of Fig. 9. In this example, an electric vehicle (not shown) is scheduled to be charged beginning at about 1:00 a.m. and ending at about 7:00 a.m. That time period corresponds to the lowest demand/cost period of time available according to historical data 902. However, the vehicle charging period precedes the time period when a solar grid tie system (not shown) is generating power which a user would not pay for directly. In light of the information displayed in screen 1100, and depending upon a user's need for his or her vehicle and weather conditions, the user could manipulate graphical calendar 1102 to schedule the electric vehicle to be charged during the time when solar power is being generated, thereby further reducing charges by the power utility.

The foregoing description has been directed to particular embodiments of this invention. It will be apparent, however, that other variations and modifications may be made to the described embodiments, with the attainment of some or all of their advantages. Additionally, the procedures or processes may be implemented in hardware, software, embodied as a computer-readable medium having program instructions, firmware, or a combination thereof. Therefore, it is the object of the appended claims to cover all such variations and modifications as come within the scope of the invention.

## Claims

1. A method comprising:
displaying a graphical user interface, the graphical user interface showing simultaneously a graphical schedule (1002) for at least one device, and historical information related to the at least one device, the graphical schedule (1002) indicating a relationship between time and at least one user-selected condition to be satisfied by the at least one device or at least one user selected action to be taken by the at least one device, the historical information including historical data that indicates a relationship between time and price charged for power by a utility modifying the graphical schedule (1002) based on graphical manipulations from a user;
providing the graphical schedule (1002) to a programmable multimedia controller which includes an interface to the at least one device,
using the programmable multimedia controller to control the at least one device in accordance with the graphical schedule.

2. The method of claim 1, wherein modifying the graphical schedule comprises:
changing a selected time at which the at least one user-selected condition is to be satisfied by the at least one device or the at least one user selected action is to be taken by the at least one device.

3. The method of claim 1 or 2, wherein the graphical schedule includes a first axis that indicates time and a second axis related to the user-selected condition to be satisfied by the at least one device or the least one user selected action to be taken by the at least one device.

4. The method of one of the claims 1 to 3, wherein the historical data represents price charged for power as a function of time.

5. The method of one of the claims 1 to 4, wherein the graphical schedule indicates a relationship between time and at least one user-selected condition to be satisfied, the at least one device comprises a heating, ventilation, and air conditioning (HVAC) system and the at least one user-selected condition is temperature in a predetermined physical space.

6. The method of one of the claims 1 to 5, wherein the graphical schedule indicates a relationship between time and at least one user selected action to be taken by the at least one device, the at least one device is charged by electricity and the at least one user selected action to be taken is charging the at least one device.

7. The method of one of the claims 1 to 6, wherein the graphical user interface is provided on a touch-sensitive display and the graphical manipulations from the user include swipes or gestures on the touch-sensitive display.

8. The method of one of the claims 1 to 7, further comprising:
displaying in the graphical user interface another graphical schedule having one or more presets, each preset representing a user-selected environmental state for a predetermined physical space, the environmental state caused by a plurality of different types of devices taking actions defined by the preset, the another graphical schedule indicating a relationship between time and the one or more presets;
modifying the another graphical schedule based on graphical manipulations from the user;
providing the another graphical schedule and the one or more presets to a programmable multimedia controller which includes interfaces to the plurality of different types of devices; and
using the programmable multimedia controller to control the plurality of different types of devices in accordance with the another graphical schedule and the one or more presets.

9. The method of claim 8, wherein modifying the another graphical schedule comprises:
changing a selected time at which at least one of the one or more presets is scheduled to run.

10. The method of claim 8 or 9, wherein the another graphical schedule includes a first axis that indicates time and a second axis which indicates the one or more presets.

11. An apparatus comprising
a user interface device that includes a screen with a graphical user interface that displays simultaneously a graphical schedule (1002) for at least one device, and
historical information related to the at least one device, the graphical schedule (1002) indicating a relationship between time and at least one user-selected condition to be satisfied by the at least one device, at least one user selected action to be taken to be taken by the at least one device, or at least one preset that represents a user-selected environmental state for a predetermined physical space produced using the at least one device, and the historical information including historical data that indicates a relationship between time and price charged for power by a utility the user interface device further configured to receive graphical manipulations from a user in response to which the graphical schedule (1002) is changed;
a data integration service configured to store data related to the graphical schedule (1002) in, and retrieve data related to the graphical schedule from, a database; and
a scheduler process configured to issue commands to the at least one device in accordance with the graphical schedule.

12. The apparatus of claim 11, wherein the graphical schedule indicating a relationship between time and at least one preset that represents a user-selected environmental state for a predetermined physical space produced using a plurality of different types of devices, and wherein the environmental state is caused by the plurality of different types of devices taking actions defined by the preset.

13. The apparatus of claim 11 or 12, further comprising:
a general purpose computer configured to execute software processes.

14. The apparatus of one of the claims 11 to 13, wherein the screen is a touch-sensitive display and the graphical manipulations from the user include swipes or gestures on the touch-sensitive display.

## Patentansprüche

1. Verfahren mit den Schritten:
Anzeigen einer grafischen Benutzerschnittstelle, wobei die grafische Benutzerschnittstelle gleichzeitig einen grafischen Zeitplan (1002) für mindestens ein Gerät und Verlaufsinformationen darstellt, die auf das mindestens eine Gerät bezogen sind, wobei der grafische Zeitplan (1002) eine Beziehung angibt zwischen Zeit und zumindest einer durch das mindestens eine Gerät zu erfüllenden, vom Benutzer gewählten Bedingung oder zumindest einer durch das mindestens eine Gerät vorzunehmenden, vom Benutzer gewählten Maßnahme, wobei die Verlaufsinformationen historische Daten einschließen, die eine Beziehung angeben zwischen Zeit und Preis, der für Leistung durch ein Dienstprogramm berechnet wird;
Modifizieren des grafischen Zeitplans (1002) basierend auf grafischen Manipulationen von einem Benutzer;
Bereitstellen des grafischen Zeitplans (1002) für eine programmierbare Multimediasteuereinheit, die eine Schnittstelle für mindestens das eine Gerät enthält;
Verwenden der programmierbaren Multimediasteuereinheit zur Steuerung mindestens des einen Gerätes in Übereinstimmung mit dem grafischen Zeitplan.

2. Verfahren nach Anspruch 1, wobei Modifizieren des grafischen Zeitplans umfasst:
Ändern eines gewählten Zeitpunkts, an dem die zumindest eine vom Benutzer gewählte Bedingung durch mindestens das eine Gerät zu erfüllen ist, oder die zumindest eine vom Benutzer gewählte Maßnahme durch das mindestens eine Gerät vorzunehmen ist.

3. Verfahren nach Anspruch 1 oder 2, wobei der grafische Zeitplan eine erste Achse, die Zeit angibt, und eine zweite Achse einschließt, die bezogen ist auf die vom Benutzer gewählte Bedingung, die durch das mindestens eine Gerät zu erfüllen ist, oder die zumindest eine vom Benutzer gewählte Maßnahme, die durch das mindestens eine Gerät vorzunehmen ist.

4. Verfahren nach einem der Ansprüche 1 bis 3, wobei die historischen Daten einen Preis darstellen, der für Leistung als eine Funktion der Zeit berechnet wird.

5. Verfahren nach einem der Ansprüche 1 bis 4, wobei der grafische Zeitplan eine Beziehung zwischen Zeit und zumindest einer zu erfüllenden, vom Benutzer gewählten Bedingung angibt, wobei das mindestens eine Gerät ein Heizungs-, Lüftungs- und Klimatisierungssystem (HVAC) umfasst und die zumindest eine vom Benutzer gewählte Bedingung Temperatur in einem vorgegebenen physikalischen Raum ist.

6. Verfahren nach einem der Ansprüche 1 bis 5, wobei der grafische Zeitplan eine Beziehung angibt zwischen Zeit und zumindest einer vom Benutzer gewählten Maßnahme, die durch das mindestens eine Gerät vorzunehmen ist, wobei das mindestens eine Gerät durch Elektrizität geladen wird und die vorzunehmende, zumindest eine vom Benutzer gewählte Maßnahme das Laden des mindestens einen Gerätes ist.

7. Verfahren nach einem der Ansprüche 1 bis 6, wobei die grafische Benutzerschnittstelle auf einem Sensorbildschirm vorgesehen ist und die grafischen Manipulationen von dem Benutzer Streifbewegungen oder Gesten auf dem Sensorbildschirm umfassen.

8. Verfahren nach einem der Ansprüche 1 bis 7, des Weiteren umfassend:
Anzeigen in der grafischen Benutzerschnittstelle eines anderen grafischen Zeitplans, der eine oder mehrere Voreinstellungen aufweist, wobei jede Voreinstellung einen vom Benutzer gewählten Umgebungsstatus für einen vorgegebenen physikalischen Raum darstellt, wobei der Umgebungsstatus durch eine Vielzahl von unterschiedlichen Gerätetypen bewirkt wird, die durch die Voreinstellung definierte Maßnahmen ergreifen, wobei der andere grafische Zeitplan eine Beziehung angibt zwischen Zeit und der einen oder mehreren Voreinstellungen;
Modifizieren des anderen grafischen Zeitplans basierend auf grafischen Manipulationen von dem Benutzer;
Bereitstellen des anderen grafischen Zeitplans und der einen oder mehreren Voreinstellungen für eine programmierbare Multimediasteuereinheit, die Schnittstellen für die Vielzahl von unterschiedlichen Gerätetypen enthält; und
Verwenden der programmierbaren Multimediasteuereinheit zur Steuerung der Vielzahl von unterschiedlichen Gerätetypen in Übereinstimmung mit dem anderen grafischen Zeitplan und der einen oder mehreren Voreinstellungen.

9. Verfahren nach Anspruch 8, wobei das Modifizieren des anderen grafischen Zeitplans umfasst: Ändern eines gewählten Zeitpunkts, an dem zumindest eine der einen oder
mehreren Voreinstellungen zum Durchlaufen zeitlich organisiert wird.

10. Verfahren nach Anspruch 8 oder 9, wobei der andere grafische Zeitplan eine erste Achse, die Zeit angibt, und eine zweite Achse enthält, die die eine oder mehrere Voreinstellungen angibt.

11. Vorrichtung, umfassend
ein Gerät mit Benutzerschnittstelle, das einen Bildschirm mit einer grafischen Benutzerschnittstelle enthält, die gleichzeitig einen grafischen Zeitplan (1002) für mindestens ein Gerät und Verlaufsinformationen angibt, die auf das mindestens eine Gerät bezogen sind, wobei der grafische Zeitplan (1002) eine Beziehung angibt zwischen Zeit und zumindest einer durch das mindestens eine Gerät zu erfüllenden, vom Benutzer gewählten Bedingung, zumindest einer vorzunehmenden, vom Benutzer gewählten Maßnahme, die durch das mindestens eine Gerät vorzunehmen ist, oder mindestens einer Voreinstellung, die einen vom Benutzer gewählten Umgebungsstatus für einen vorgegebenen physikalischen Raum darstellt, der unter Verwendung des mindestens einen Gerätes erzeugt wird, und der Verlaufsinformationen, die historische Daten einschließen, die eine Beziehung anzeigen zwischen Zeit und Preis, der für Leistung durch ein Dienstprogramm berechnet wird, wobei das Gerät mit Benutzerschnittstelle des Weiteren konfiguriert ist, um grafische Manipulationen von einem Benutzer zu empfangen, auf deren Reaktion der grafische Zeitplan (1002) geändert wird;
einen Datenintegrationsdienst, der konfiguriert ist, um auf den grafischen Zeitplan (1002) bezogene Daten in einer Datenbank zu speichern und daraus auf den grafischen Zeitplan bezogene Daten wiederzugewinnen; und
ein Organisationsprogrammprozess, der konfiguriert ist, um Befehle an mindestens das eine Gerät in Übereinstimmung mit dem grafischen Zeitplan auszugeben.

12. Vorrichtung nach Anspruch 11, wobei der grafische Zeitplan eine Beziehung zwischen Zeit und mindestens einer Voreinstellung angibt, die einen vom Benutzer gewählten Umgebungsstatus für einen vorgegebenen physikalischen Raum darstellt, der unter Verwendung einer Vielzahl von unterschiedlichen Gerätetypen erzeugt wird, und wobei der Umgebungsstatus durch die Vielzahl von unterschiedlichen Gerätetypen bewirkt wird, die durch die Voreinstellung definierte Maßnahmen ergreifen.

13. Vorrichtung nach Anspruch 11 oder 12, des Weiteren umfassend:
einen Allzweckcomputer, der zum Abarbeiten von Softwareprozessen konfiguriert ist.

14. Vorrichtung nach einem der Ansprüche 11 bis 13, wobei der Bildschirm ein Sensorbildschirm ist und die grafischen Manipulationen von dem Benutzer Streifbewegungen oder Gesten auf dem Sensorbildschirm umfassen.

## Revendications

1. Procédé comprenant les étapes consistant à :
afficher une interface utilisateur graphique, l'interface utilisateur graphique affichant simultanément une programmation graphique (1002) pour au moins un dispositif et des informations historiques relatives audit au moins un dispositif, la programmation graphique (1002) indiquant une relation entre le temps et au moins une condition sélectionnée par l'utilisateur devant être satisfaite par ledit au moins un dispositif ou au moins une action sélectionnée par l'utilisateur devant être effectuée par ledit au moins un dispositif, les informations historiques incluant des données historiques indiquant une relation entre le temps et le prix facturé pour l'énergie par un service public ;
modifier la programmation graphique (1002) sur la base de manipulations graphiques effectuées par un utilisateur ;
fournir la programmation graphique (1002) à un dispositif de commande multimédia programmable qui inclut une interface avec ledit au moins un dispositif, en utilisant le dispositif de commande multimédia programmable pour commander ledit au moins un dispositif en fonction de la programmation graphique.

2. Procédé selon la revendication 1, dans lequel l'étape consistant à modification la programmation graphique consiste à :
modifier un temps sélectionné auquel ladite au moins une condition sélectionnée par l'utilisateur doit être satisfaite par ledit au moins un dispositif ou ladite au moins une action sélectionnée par l'utilisateur doit être effectuée par ledit au moins un dispositif.

3. Procédé selon la revendication 1 ou 2, dans lequel la programmation graphique inclut un premier axe qui indique le temps et un second axe relatif à la condition sélectionnée par l'utilisateur devant être satisfaite par ledit au moins un dispositif ou à ladite au moins une action sélectionnée par l'utilisateur devant être effectuée par ledit au moins un dispositif.

4. Procédé selon l'une des revendications 1 à 3, dans lequel les données historiques représentent le prix facturé pour l'énergie en fonction du temps.

5. Procédé selon l'une des revendications 1 à 4, dans lequel la programmation graphique indique une relation entre le temps et au moins une condition sélectionnée par l'utilisateur devant être satisfaite, ledit au moins un dispositif comprend un système de chauffage, ventilation et climatisation (HVAC) et ladite au moins une condition sélectionnée par l'utilisateur est une température dans un espace physique prédéterminé.

6. Procédé selon l'une des revendications 1 à 5, dans lequel la programmation graphique indique une relation entre le temps et au moins une action sélectionnée par l'utilisateur devant être effectuée par ledit au moins un dispositif, ledit au moins un dispositif est chargé par de l'électricité et ladite au moins une action sélectionnée par l'utilisateur devant être effectuée consiste à charger ledit au moins un dispositif.

7. Procédé selon l'une des revendications 1 à 6, dans lequel l'interface utilisateur graphique est prévue sur un écran tactile et les manipulations graphiques de l'utilisateur incluent des balayages ou des gestes sur l'écran tactile.

8. Procédé selon l'une des revendications 1 à 7, comprenant en outre les étapes consistant à :
afficher dans l'interface utilisateur graphique une autre programmation graphique ayant un ou plusieurs préréglages, chaque préréglage représentant un état environnemental sélectionné par l'utilisateur pour un espace physique prédéterminé, l'état environnemental étant causé par une pluralité de différents types de dispositifs effectuant des actions définies par le préréglage, l'autre programmation graphique indiquant une relation entre le temps et lesdits un ou plusieurs préréglages ;
modifier l'autre programmation graphique sur la base de manipulations graphiques de l'utilisateur ;
fournir l'autre programmation graphique et lesdits un ou plusieurs préréglages à un dispositif de commande multimédia programmable qui inclut des interfaces avec la pluralité de différents types de dispositifs ; et
utiliser le dispositif de commande multimédia programmable pour commander la pluralité de différents types de dispositifs en fonction de l'autre programmation graphique et desdits un ou plusieurs préréglages.

9. Procédé selon la revendication 8, dans lequel l'étape consistant à modifier l'autre programmation graphique consiste à :
modifier un temps sélectionné auquel au moins l'un desdits un ou plusieurs préréglages est programmé pour s'exécuter.

10. Procédé selon la revendication 8 ou 9, dans lequel l'autre programmation graphique inclut un premier axe qui indique le temps et un second axe qui indique lesdits un ou plusieurs préréglages.

11. Appareil comprenant :
un dispositif d'interface utilisateur qui inclut un écran avec une interface utilisateur graphique qui affiche simultanément une programmation graphique (1002) pour au moins un dispositif et des informations historiques relatives audit au moins un dispositif, la programmation graphique (1002) indiquant une relation entre le temps et au moins une condition sélectionnée par l'utilisateur devant être satisfaite par ledit au moins un dispositif, au moins une action sélectionnée par l'utilisateur devant être effectuée par ledit au moins un dispositif ou au moins un préréglage qui représente un état environnemental sélectionné par l'utilisateur pour un espace physique prédéterminé produit en utilisant ledit au moins un dispositif, et les informations historiques incluant des données historiques qui indiquent une relation entre le temps et le prix facturé pour l'énergie par un service public, le dispositif d'interface utilisateur étant en outre configuré pour recevoir des manipulations graphiques d'un utilisateur en réponse auxquelles la programmation graphique (1002) est modifiée ;
un service d'intégration de données configuré pour stocker des données relatives à la programmation graphique (1002) dans une base de données et pour récupérer des données relatives à la programmation graphique à partir d'une base de données ; et
un processus programmateur configuré pour émettre des instructions audit au moins un dispositif en fonction de la programmation graphique.

12. Appareil selon la revendication 11, dans lequel la programmation graphique indique une relation entre le temps et au moins un préréglage qui représente un état environnemental sélectionné par l'utilisateur pour un espace physique prédéterminé produit en utilisant une pluralité de types différents de dispositifs, et dans lequel l'état environnemental est causé par la pluralité de types différents de dispositifs effectuant des actions définies par le préréglage.

13. Appareil selon la revendication 11 ou 12, comprenant en outre :
un ordinateur à usage général configuré pour exécuter des processus logiciels.

14. Appareil selon l'une des revendications 11 à 13, dans lequel l'écran est un écran tactile et les manipulations graphiques de l'utilisateur incluent des balayages ou des gestes sur l'écran tactile.
